# EUROPEAN PATENT SPECIFICATION

(11) **EP 1 256 091 B1**
(45) Date of publication and mention of the grant of the patent: **28.04.2004**
(21) Application number: 01911625.0
(22) Date of filing: 09.02.2001
(51) Int. Cl.: G06F 3/033, G06K 11/18

(54) **METHOD AND SYSTEM FOR CONFIGURING AND UNLOCKING AN ELECTRONIC READING DEVICE**
VERFAHREN UND SYSTEM ZUR KONFIGURATION UND ZUM DEBLOCKIEREN EINER ELEKTRONISCHEN VORRICHTUNG
PROCEDE ET SYSTEME POUR CONFIGURER ET DEVERROUILLER UN DISPOSITIF DE LECTURE ELECTRONIQUE

(30) Priority: 16.02.2000 US 182742 P; 16.03.2000 US 190343 P; 28.03.2000 US 192662 P; 31.10.2000 US 703351; 31.10.2000 US 703503; 31.10.2000 US 703321
(43) Date of publication of application: 13.11.2002
(73) Proprietor: Telefonaktiebolaget L M Ericsson (Publ), 126 25 Stockholm (SE)
(72) Inventor: HOLLSTRÖM, Magnus, S-222 41 Lund (SE); TILLGREN, Magnus, S-214 41 Malmö (SE); OLSSON, Patrik, S-217 72 Malmö (SE); BORGSTRÖM, Anders, S-239 32 Skanör (SE); GÄRDENFORS, Torbjörn, S-211 50 Malmö (SE)
(74) Representative: Boesen, Johnny Peder
(86) International application number: PCT/EP2001/001403
(87) International publication number: WO 2001/061635

(56) References cited:
- EP-A- 0 407 734
- WO-A-94/10652
- GB-A- 2 306 669
- US-A- 5 477 012
- US-A- 5 652 412
- US-A- 5 661 506

## Description

### BACKGROUND OF THE INVENTION

### Technical Field of the Invention

The present invention relates in general to the communications field, and in particular to an interaction of an electronic reading device with an address pattern.

### Description of Related Art

Numerous devices exist for accepting user input and controlling user interaction with desktop and portable computers, personal digital assistance (PDAs), mobile phones, and other types of electronic devices. For example, a keyboard can be used to accept typed input and other types of commands, a mouse or a track-ball can be used to provide relative motion input as well as various types of point-and-click selections, a keypad can be used to provide input of numerical data and functional commands, navigational keys can be used for scrolling lists or otherwise repositioning a cursor, and various types of touchpads or touchscreens can be used to provide absolute positional coordinate inputs. Each type of mechanism for accepting input and for supporting user interaction has benefits and disadvantages in terms of size, convenience, flexibility, responsiveness, and easy of use. Generally, the selection of a particular type of input mechanism is dependent upon the function of the application and the degree and type of interaction required.

WO 95/10652 discloses a scanning pen adapted to be mounted on and guided along a transparent ruler for scanning text from conventional printed materials. As the scanning pen is moved over a line of text, an indicia bar along the length of the ruler is also scanned in order to parameterize the pixels being scanned.

GB 2 306 669 discloses a pen-like instrument with a writing point for making written entries upon a physical document and transducers for sensing the three-dimensional forces exerted on the writing tip, as well as the motion associated with the act of writing. The writing point additionally includes a CCD array for reading pre-printed bar codes from document pages. A communication link between the instrument and an associated base unit allows for transferring the transducer data from the instrument to a processor within the base unit.

Lazzouni et al., U.S. Pat. No. 5,652,412, generally discloses an information recording system having a writing paper with a prerecorded invisible pattern of pixels associated with the surface of the writing paper. The pixels contain encoded optically readable position information, which identifies a coordinate position on the writing surface. A pen can detect its position based on the optically readable position information and can make markings on the writing surface. An electronic representation of the marking is recorded in a recording unit based on the detected positions on the writing surface.

Sekendur, U.S. Patent No. 5,477,012, represent the basis for the preamble of claims 1 and 6 and discloses the use of a surface formatted with position-related coding means for indicating X-Y coordinates capable of reflecting a frequency of light. A stylus has a light source of a frequency for illuminating the surface. The frequency of light is absorbed by the surrounding surface and reflected back into the stylus onto a charge-coupled device (CCD) chip located within the stylus. The information is sent to a computer for processing and finally output to the user. The stylus is composed of a pen shaped optical conduit.

Lazzouni et al., U.S. Patent No. 5,661,506, generally describes an information recording apparatus for use with paper having a prerecorded pattern of pixels associated with a writing surface. The information recording apparatus comprises a pen for making visible markings on the writing surface. The apparatus further comprises image means and recording/processing unit coupled to the pen.

EP 0 407 734 generally relates to an optical stylus and passive digitizing tablet data input system.

With the ever expanding capabilities and availability of applications both on the Internet and the area of wireless technology, there continues to be a need to develop and provide new mechanisms for accepting input and interacting with users. In particular, some of the existing technologies suffer from drawbacks or limitations, such as size and flexibility, that make them impractical and/or inconvenient to use in some situations. By expanding the range of mechanisms for supporting user interaction, application developers and end-users can have greater flexibility in the selection of input devices. Preferably, any such new mechanisms will provide increased flexibility and will maximize user convenience. In addition, the development of new mechanisms for interacting with users can expand the realm of potential applications.

For example, while a keyboard typically provides a great deal of flexibility, particularly when it is used in connection with a mouse, a touchscreen, or other navigational device, its size makes it inconvenient in many cases, especially in the wireless context.

The present invention comprises a method and system for controlling an electronic device. One or more control functions of the electronic device are represented by fields on a specially formatted surface. In particular, the specially formatted surface includes an address pattern. A reading device detects a portion of the address pattern that is adjacent to the reading device. Using the detected portion, a substantially precise location of the reading device relative to the address pattern can be determined. Moreover, by detecting multiple consecutive positions, substantially precise movements of the reading device can also be determined. If the position and/or movements of the reading device are determined to be within a control field of the specially formatted surface, a corresponding control function can be identified and performed on the electronic device.

Using such a configuration, a number of control functions can be executed using the reading device in connection with the specially formatted surface, such as text input, drawing input, navigation, joystick functions and other special functions. These functions can be performed on any type of electronic device capable of communicating with the reading device, including a personal computer (PC) , mobile phone, PDA, and the like. Furthermore, by providing a selection or "click" means, particular fields or parts of fields on the specially formatted surface can be selected. Such a selection means can include, for example, a pressure-sensitive means on the reading device, a click button on the reading device, or a detection by the reading device of a portion of a selection field.

### SUMMARY OF THE INVENTION

The present invention comprises a method and system for controlling an electronic device. One or more control functions of the electronic device are represented by fields on a specially formatted surface. In particular, the specially formatted surface includes an address pattern. A reading device detects a portion of the address pattern that is adjacent to the reading device. Using the detected portion, a substantially precise location of the reading device relative to the address pattern can be determined. Moreover, by detecting multiple consecutive positions, substantially precise movements of the reading device can also be determined. If the position and/or movements of the reading device are determined to be within a control field of the specially formatted surface, a corresponding control function can be identified and performed on the electronic device.

Using such a configuration, a number of control functions can be executed using the reading device in connection with the specially formatted surface, such as text input, drawing input, navigation, joystick functions and other special functions. These functions can be performed on any type of electronic device capable of communicating with the reading device, including a personal computer (PC), mobile phone, PDA, and the like. Furthermore, by providing a selection or "click" means, particular fields or parts of fields on the specially formatted surface can be selected. Such a selection means can include, for example, a pressure-sensitive means on the reading device, a click button on the reading device, or a detection by the reading device of a portion of a selection field.

As already mentioned, US 5 477 012 discloses the use of a surface formatted with position-related coding means for indicating X-Y coordinates and capable of reflecting light. A stylus has a light source for illuminating the surface. The light is absorbed and/or reflected by the surface in dependence of the coding means back into the stylus onto a charge-coupled device (CCD) chip located within the stylus. The information is sent to a computer for processing and finally output to the user.

US 4 825 058 discloses a bar code reader, which can be configured by reading bar code labels arranged in a special configuration area.

However, none of these documents suggest how to prevent unauthorized use of the electronic reading device.

The present invention comprises a method and system for configuring and unlocking an electronic reading device. In particular, the electronic reading device can be configured by entering information on an address pattern of a specially formatted surface by writing on, or touching selected positions on the address pattern. The written information, or the information that corresponds to the selected positions, is detected by the electronic reading device using a reading sensor that detects one or more portions of the electronic reading device relative to the address pattern. The detected position or positions are converted into configuration data by a processor within the electronic reading device or in a server associated therewith. For example, handwritten information or a selection of particular alphanumeric fields can be converted into alphanumeric characters. The configuration is then stored in the electronic reading device or in the server. As a result, the configuration data is associated with the electronic reading device for all subsequent use of the electronic reading device.

The configuration data may comprise a personal identification number (PIN) or handwritten signature. Each time the electronic reading device is subsequently powered up, the user of the device will be required to enter the PIN or signature to enable use of, or unlock, the electronic reading device. In particular, the entered information is compared with a stored PIN or signature to determine whether there is a match. If so, the electronic reading device is enabled or unlocked. By using such an unlocking scheme, unauthorized use of the electronic reading device can be prevented.

The method and system may utilize an electronic reading device that includes a sensor for detecting portions of an address pattern on a specially formatted surface. In particular, the surface is formatted for use in controlling a specific electronic utility device and includes an address pattern from which a position on the address pattern can be determined by detecting a small portion of the address pattern. Thus, using the portion of the address pattern detected by the electronic reading device, a position or positions of the electronic reading device relative to the address pattern can be determined. The position or positions can then be converted into a control message, which is sent to a server associated with the specific electronic utility device for use in controlling, accessing, or operating the utility device.

Instructions for translating detected positions into control messages may be downloaded to a processor or wireless application protocol (WAP) browser. In performing the translation, the processor or WAP browser identifies a uniform resource locator (URL) associated with the detected portion of the address pattern and generates common gateway interface (CGI) calls that correspond to information entered, selected, or written with the electronic reading device. Once the processor or WAP browser performs this translation, the control message, which contains the CGI calls, is sent via a Bluetooth™ radio interface to a WAP server at the identified URL. The WAP server then directs the specific electronic utility device to perform the requested functions specified in the control message.

The processor or WAP browser may be contained within the electronic reading device. Alternatively, the processor or WAP browser is contained in a separate electronic device, such as a mobile station. In either case, communications between the electronic reading device, the separate electronic device, and the WAP server are preferably conducted via a Bluetooth™ radio interface.

### BRIEF DESCRIPTION OF THE DRAWINGS

For a more complete understanding of the present invention, reference is made to the following detailed description taken in conjunction with the accompanying drawings wherein:
FIGURE 1 is a block diagram of a system in which an electronic pen can be used as an input device;
FIGURE 2 is a schematic diagram of a system for supporting use of the electronic pen described in connection with FIGURE 1;
FIGURE 3 is an illustration of the protocol stacks that can be used in the case of local communications between an electronic pen and an electronic pen client;
FIGURE 4 is an illustration of protocol stacks that can be used when an electronic pen and an electronic pen client communicate with one another via an Internet connection;
FIGURE 5 is an illustration of a protocol stack for communications between an electronic pen client and each of the supporting entities when the electronic pen client is not located within a server on the Internet;
FIGURE 6 is an illustration of protocol stacks that are used for communications between an electronic pen client and each of the supporting entities when the electronic pen client is located on the Internet;
FIGURE 7 is a block diagram of the electronic pen logic that handles positions, strokes, actions, and grid descriptions;
FIGURE 8 is a block diagram of a state machine for the electronic pen control block shown in FIGURE 7;
FIGURE 9 is a block diagram of a state machine for an electronic pen client;
FIGURES 10A-10C are a message flow and signaling diagram illustrating the operation of the electronic pen system shown and discussed in connection with FIGURE 2;
FIGURE 11 is a block diagram of the electronic pen for use in configuring the electronic pen in accordance with one possible embodiment of the present invention; and
FIGURE 12 illustrates an example of an electronic pen setting form that can be included as a page in the electronic pen user manual and that can be used for configuring the electronic pen;
FIGURE 13 is a schematic diagram of a system for use in establishing a connection after selection of the established connection box shown in FIGURE 12;
FIGURE 14 illustrates an example of a specially formatted paper for PC navigation and input;
FIGURE 15 depicts an illustrative example of a specially formatted paper for cellular phone navigation and input;
FIGURE 16 is an illustration of an electronic pen used in performing an advanced joystick functionality; and
FIGURE 17 is a schematic diagram of a control system in accordance with the present invention.

### DETAILED DESCRIPTION OF THE INVENTION

The present invention relates to a system in which an electronic reading device, such as an electronic pen, an electronic mouse, or a hand scanner, works in cooperation with an address pattern (e.g., a specially formatted paper) to provide for a detection of a location of the electronic reading device over the address pattern. For instance, a pattern of dots can be defined such that, by examining a very small portion of the pattern, a precise location in the overall pattern can be determined. In fact, it is possible to define a pattern that has the size of 73,000,000,000,000 A4 pages, which is equivalent to half the size of the entire United States. Portions of the pattern can be placed on sheets of paper or other objects.

Then, using an electronic scanner pen that can detect the dots in the pattern, it is possible to detect the location of the pen with respect to the unique pattern. For example, when such a pen is used in connection with a specially formatted paper, the pen can detect its position (e.g., using a built in camera) by detecting a 3 mm by 3 mm portion of the pattern. By taking approximately 100 pictures per second, the pen is capable of determining its exact position to within 0.1 mm or less. This system can be used to provide user input, to facilitate user interaction, or to store handwritten notes or drawings. Moreover, by associating portions of the overall pattern with certain applications, such a system can be used to interact with wide variety of applications.

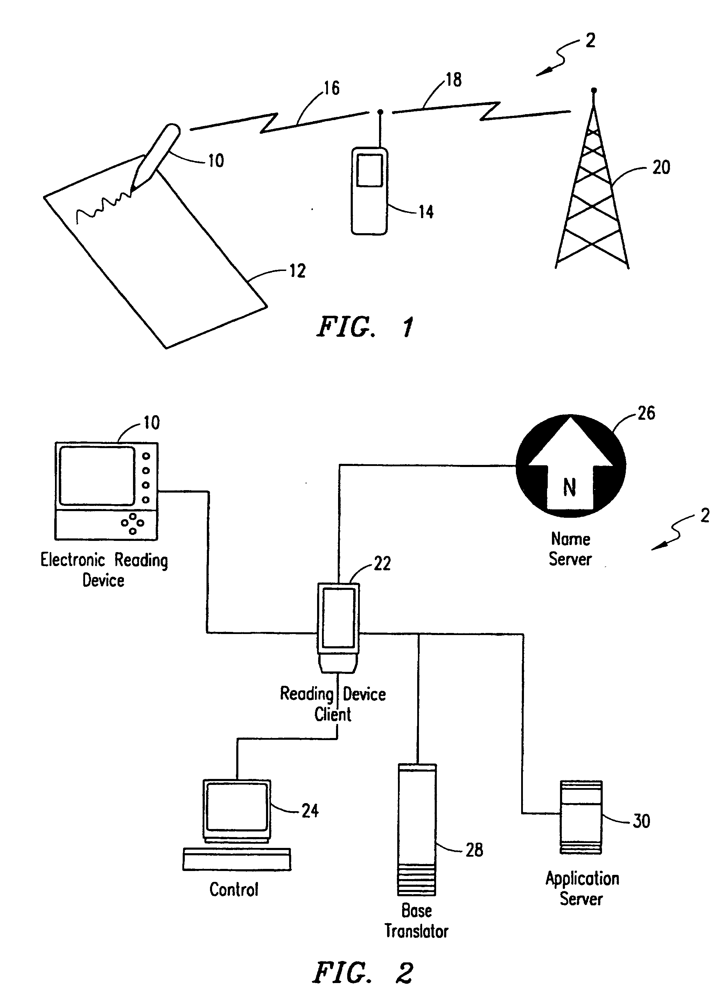

Referring now to FIGURE 1, there is illustrated an example of a system 2 in which an electronic pen 10 can be used as an input device. The electronic pen 10 includes an ink cartridge and is capable of writing in a typical fashion. The electronic pen 10, however, includes some type of sensor (e.g., a built-in camera) that is used for detecting an address pattern on a specially formatted piece of paper 12. In particular, the paper 12 is formatted with a small portion of a large address pattern such that when the electronic pen 10 is used to write on or otherwise make marks on the paper 12, the writings or markings can be electronically detected and stored.

As an example, the paper 12 might constitute a form that can be used for sending an email. Thus, the paper 12 might include a space for writing in the email address of an intended recipient, a space for writing a subject of the email, and a space for writing the body of the email. As the electronic pen 10 is used to fill in each of the spaces, the position and movement of the electronic pen 10 on the paper 12 can be determined by repeatedly detecting the current x, y coordinates of the pen 10 (e.g., at rate of 100 frames per second). The markings can then be converted into ASCII text using an appropriate handwriting recognition program. Once the user completes the form, the email can be sent, for example, by checking a send box at a predetermined location on the paper 12.

Preferably, the coordinate information collected by the pen 10 is sent by a short range radio transmitter in the electronic pen 10 to a nearby mobile station 14 using a short range radio interface 16 such as a local wireless radio link (e.g., a local wireless radio link supported by Ericsson's Bluetooth™ wireless communications technology). Alternatively, instead of using a mobile station 14, the coordinate information could also be sent to, for instance, a desktop or portable computer, a personal digital assistant (PDA), a television, or a Bluetooth terminal. Moreover, instead of using a local wireless radio link, other types of local wireless links, such as inductive coupling and infrared light; other types of radio links, such as Global System for Mobile Communication (GSM); or wired transmission media, such as a cable can also be used. The information can then be forwarded via an appropriate link, such as a cellular air interface 18, to a base station 20 or other network node.

Referring now to FIGURE 2, there is illustrated a schematic diagram of a system 2 for supporting use of the electronic pen 10 described in connection with FIGURE 1. Throughout the subsequent discussion, the system 2 is described primarily in connection with an electronic pen 10. It will be understood, however, that the invention and the underlying system 2 can instead use any type of electronic reading device, such as an electronic pen, an electronic mouse, or a hand scanner. As shown in FIGURE 2, the system 2 includes six different entities, including the electronic pen 10, electronic pen client 22, a control node 24, a name server 26, a base translator 28, and an application server 30. Although these various devices are described and depicted separately, it is also possible to combine two or more of the entities into the same device (e.g., the electronic pen 10 and electronic pen client 22 can be contained in the same device).

The electronic pen 10 is responsible for detecting positions on the address pattern, producing actions, and sending information to the electronic pen client 22. In addition to being able to leave pen markings, some electronic pens can also have the ability to produce other types of output, such as sound, vibration, or flashing lights. The electronic pen 10 includes a memory for storing a current grid, which comprises information relating to an area of the address pattern that is near the most recently detected position of the electronic pen 10. When the electronic pen 10 is loaded with the current grid, it knows what actions to take based on the positions that are read from the address pattern. When the electronic pen 10 is first turned on or when it moves to an area outside of the current grid, the electronic pen 10 must first request a new grid description before it can continue processing information. In such a situation, the electronic pen 10 requests a new grid description from the electronic pen client 22.

The electronic pen client 22 can be located in a mobile station 14, in a PDA, in a desktop or portable computer, in the electronic pen 10 itself, in a server somewhere on the Internet, or in another device. The electronic pen client 22 serves as the center of communications in the overall system 2. In particular, the electronic pen client 22 receives new grid requests and action requests from the electronic pen 10 and responds to these requests by contacting an appropriate entity within the overall system 2 to properly respond to the request from the electronic pen 10. Furthermore, when the electronic pen 10 is being used in connection with a particular application, the electronic pen client 22 can store the application and/or any corresponding data received from the electronic pen 10 to facilitate processing and use of the application.

The name server 26 is used for translating a detected position on the address pattern into a Uniform Resource Location (URL) associated with that position. Different portions of the address pattern are assigned to different applications. Neither the electronic pen 10 nor the electronic pen client 22, however, is aware of all of the different applications and the particular areas assigned to each application. Thus, when the electronic pen 10 detects a new or unknown position, it forwards the position information to the electronic pen client 22, which in turn sends the information to the name server 26. The name server 26 then identifies an application associated with the received position and retrieves a URL where a description of the particular application can be found. The retrieved URL can then be used by the electronic pen client 22 to retrieve the application description.

As an alternative, the name server 26 can comprise a global name server that keeps track of a location, in the form of URLs to local name servers, where more information can be found about different addresses in the pattern. Similarly, each local name server can use other local name servers to obtain the necessary information, i.e., to convert a position into a URL where an application description can be found. At the lowest level, the local electronic pen client should know all the paper addresses that are within a specific application or applications.

There are some services that should be available in the overall system 2 for which it is inconvenient or not feasible to support such services in the electronic pen 10 or the electronic pen client 22. In such a case, the base translator 28 can be used to support the services. For example, the base translator 28 might contain handwriting recognition software for converting pen actions into text or for converting pen actions into a predefined set of symbols. When such services are needed, the electronic pen client 22 can send a request to the base translator 28 along with the necessary data, and the base translator 28 can perform the requested service.

Another entity in the system 2 is a control node 24. The control node 24 is used for responding to actions in a standardized way. For example, the control node 24 can be used to respond to certain generic functions, such as "cancel" or "submit" functions, in a consistent manner without regard to the particular application that is currently active.

In addition, the control node 24 is used for creating streaming-like applications. For instance, some applications might require that the positions on the address pattern that are detected by the electronic pen 10 be immediately sent, upon detection, to the electronic pen client 22 for use by the application (i.e., the electronic pen 10 does not wait to transmit the position data until a complete stroke is detected or until a "send" field is touched). One example is an application that is used to control an industrial robot in a warehouse. In such a case, the application description that is loaded onto the electronic pen server 22 can include instructions that all positions be streamed to a control node 24. As a result, the control node 24 can receive the positions in real time and can control the robot without waiting for the form (i.e., the current grid) to be completed. Thus, the control node 24 can perform a real-time translation from detected positions to a responsive action, such as moving an object (e.g., a robot, a valve, etc.) or controlling a process.

The application server 30 is a regular web or wireless application protocol (WAP) server that supports an application associated with a particular area of the address pattern. The application server 30 stores an application description and provides the application description to the electronic pen client 22 upon request. In addition, the application server 30 receives input data from the electronic pen 10 via the electronic pen client 22. For example, the application description might define a number of data entry areas on a form. Thus when data is entered on the form by the electronic pen 10, the data is received by the electronic pen client 22, converted into text using handwriting recognition software, and forwarded to the application server 30, which stores the data or otherwise processes the data in accordance with the function of the application.

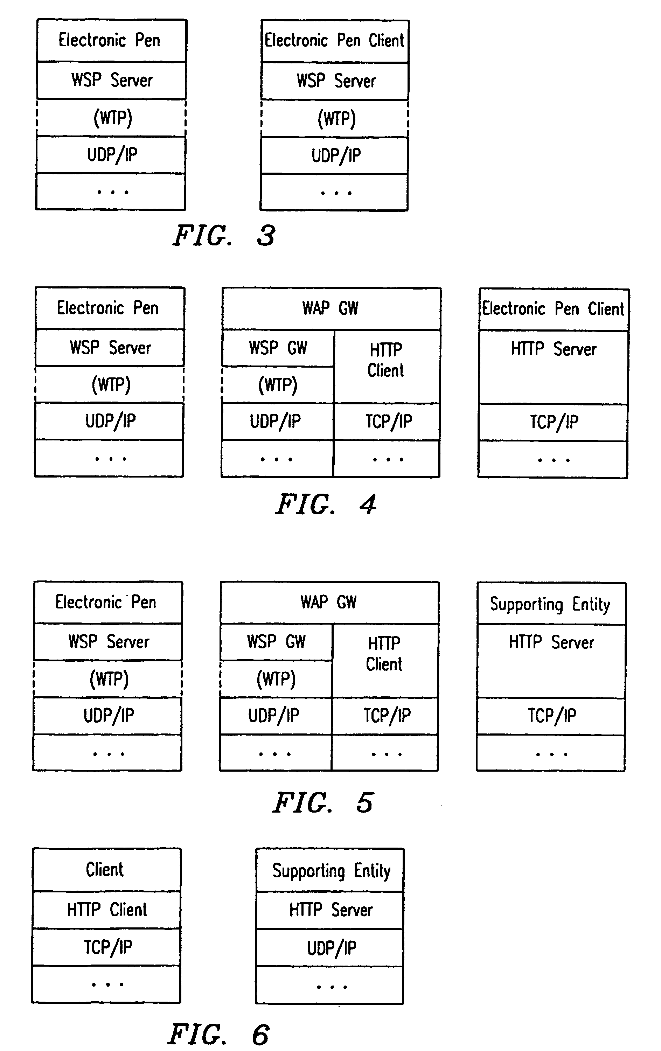

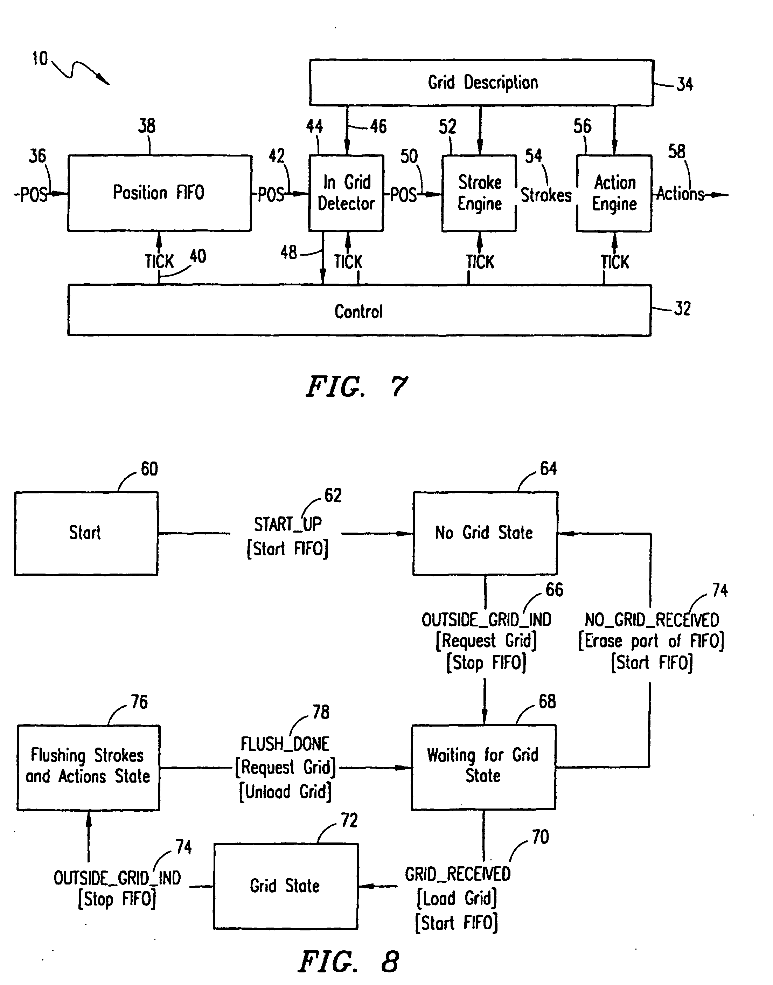

Referring now to FIGURES 3 through 6 there are illustrated various examples of protocol stacks that can be used for communicating between the entities shown in FIGURE 2. Generally, however, such protocols apply however, only if the two communicating entities are implemented in different devices. If two or more entities are combined into one device, a proprietary protocol can be used to communicate between the entities. FIGURE 3 illustrates the protocol stacks that can be used in the case of local communications (e.g., using Bluetooth) between the electronic pen 10 and the electronic pen client 22. If, on the other hand, the electronic pen 10 and the electronic pen client 22 communicate with one another via an Internet connection, the protocol stacks depicted in FIGURE 4 will be used. FIGURE 5 illustrates a protocol stack for communicating between the electronic pen client and each of the supporting entities, such as the name server 26, the control node 24, the base translator 28, and the application server 30, when the electronic pen client 22 is not contained within a server on the Internet (e.g., such as when the electronic pen client 22 is located in a mobile phone 14). Finally, FIGURE 6 depicts the protocol stacks that are used when the electronic pen client 22 is located on the Internet.

There are a number of procedures that can be used by the various entities in the system 2 to allow the system to operate properly. When the electronic pen 10 detects a position on the address pattern that is not within its currently loaded grid or when the electroric pen 10 has no currently loaded grid, the electronic pen 10 initiates a new grid procedure. The new grid procedure involves sending a new grid request object to the electronic pen client 22. The new grid request object contains the newly detected position, a description of the actions that the electronic pen 10 can natively support, and a description of the output signals that the electronic pen 10 supports. The reply to a new grid request object is a grid description, which can be provided by the electronic pen client 22 from its own internal memory or from the information provided by an application server 30. Generally, the electronic pen client 22 extracts the grid description from an application description received from the application server 30. The grid description should only contain action-field-types that the electronic pen 10 has indicated that it natively supports, which means that the electronic pen client 22 in some cases should convert the extracted grid description into a format that the electronic pen 10 can understand.

In some situations, it may be necessary for the electronic pen 10 to unload its current grid at the request of the electronic pen client 22. In such a case, the electronic pen client 22 sends an empty grid description to the electronic pen 10, thereby causing the electronic pen 10 to unload its current grid. This can occur, for example, when a particular application is complete or when a new grid description request received from the electronic pen 10 cannot be fulfilled, such as when the position received from the electronic pen 10 is not registered in the name server 26.

Another similar message is the empty grid description with a grid exception. When the electronic pen 10 requests a new grid description from the electronic pen client 22, the electronic pen client 22 uses the detected position specified in the request to ask the name server 26 for a URL where the application description can be found. If no URL is returned, the electronic pen client 22 can send an empty grid description with a grid exception to the electronic pen 10. The grid exception comprises a rectangle or other shape indicating the area around the detected position where no registered applications can be found. Preferably, the indicated area is as large as possible so that the electronic pen 10 and/or electronic pen client 22 know the extent of the surrounding area that is unassigned and do not have to repeatedly send requests to the name server 26. Thus, the empty grid description with a grid exception causes the electronic pen 10 to unload its current grid and also informs the electronic pen 10 of an area surrounding the detected position that can essentially be ignored because its is not associated with any application.

The procedure that is used when the electronic pen 10 detects a new position is a find application description location procedure. This procedure is used by the electronic pen client 22 to translate a detected position received from the electronic pen 10 into a URL where a description of an application corresponding to that position can be found. The procedure involves sending a request from the electronic pen client 22 to the name server 26 containing identification of the detected position. The name server 26 responds by sending a reply to the electronic pen client 22 containing a URL where an application description can be found or, if the detected position is not registered in the name server 26, containing an indication that no associated application is known to exist.

Once the electronic pen client 22 knows the URL where an application description can be found, the electronic pen client 22 can initiate a get application description procedure, which allows the electronic pen client 22 to retrieve the application description from the application server 30. In particular, the electronic pen client 22 sends an application description request containing a unique ID for the requesting electronic pen 10 and/or electronic pen client 22 to the application server 30 located at the URL address provided by the name server 26. In response, the application server 30 provides an application description object to the electronic pen client 22, which loads the application onto the electronic pen client 22. The application description object is similar to an HTML form with some additions and modifications.

Furthermore, the application description object can be sent from the application server 30 to the electronic pen client 22 in response to a submitted form (i.e., a submission of one completed form might automatically result in a new form being loaded onto the electronic pen client 22). A related procedure is the application submit procedure, which is used by the electronic pen client 22 when the user of the electronic pen 10 selects a "submit" field in a form. In response to the selection of the "submit" field, the electronic pen client 22 will submit the form content in accordance with instructions received in the application description. Typically, the electronic pen client 22 will submit the form content, in the same way as a regular web browser, to a URL specified in a form tag of the application description.

When an action that can be handled by the electronic pen 10 itself is generated, an action procedure is initiated by the electronic pen 10 to send an action request object to the electronic pen client 22. If the electronic pen client 22 cannot translate the action into a field value itself, the electronic pen client 22 further forwards the request to a base translator 28 for translating the action into a field value. In response to the action request object, an action reply object is sent from the electronic pen client 22 to the electronic pen 10. The action reply object contains output information that indicates to the electronic pen 10 which outputs signals to use. The output information, however, cannot be of type that the electronic pen 10 has previously indicated that it does not support. In some instances, the action reply object might contain a new grid description. In such a case the electronic pen 10 will unload its current grid description and load the new grid description. Similarly, if the action reply object contains an empty grid description, the electronic pen 10 will simply unload its current grid description.

The action request object is also sometimes used to specify actions that should be processed by the control node 24. In this instance, the electronic pen client 22 initiates a control procedure by forwarding the received action to the appropriate control node 24. As a result, the control node 24 sends an action reply object to the electronic pen client 22.

The operation of the electronic pen 10 will now be discussed in greater detail. Each electronic pen 10 has a unique pen ID, which is sent to the application server 30 when an application description is requested. The electronic pen ID allows the application to identify the particular user that is using the application and to distinguish between multiple concurrent users of the same application, such as when different electronic pens 10 are being used in connection with separate sheets of paper that each contain the same portion of the address pattern.

Referring now to FIGURE 7, there is illustrated a block diagram of the electronic pen logic that handles positions, strokes, actions, and grid descriptions for the electronic pen 10. The electronic pen 10 includes a control block 32 for controlling the operation of the electronic pen 10. A grid description block 34 represents a memory location that stores a current grid description. At any given time, the electronic pen 10 can be in either of two modes. In a first mode, a grid description is loaded, while in a second mode, the grid description block 34 is not loaded with a current grid description.

As the electronic pen 10 moves across an address pattern, the electronic pen 10 periodically (e.g., every 1/100 of a second) detects a position by detecting all of the dots within, for example, a 3mm by 3mm area. Each detected position is forwarded (as indicated at 36) to a position first in first out (FIFO) block 38, which acts as a buffer for temporarily storing the detected positions. The clocking of the position FIFO block 38 is controlled by the control block 32 (as indicated at 40).

The detected position is fed from the position FIFO block 38 (as indicated at 42) to an in grid detector 44. The in grid detector 44 retrieves data from the grid description block 34 (as indicated at 46) and determines whether the received position is within the loaded grid description. If not, the in grid detector 44 notifies the control block 32, which in turn initiates a request for a new grid. When the detected position is within the current grid, the position is then sent (as indicated at 50) from the in grid detector 44 to a stroke engine 52. The stroke engine 52 converts the received positions into strokes, which are then sent (as indicated at 54) to an action engine 56. A complete stroke is created when the electronic pen 10 is lifted from the paper or when it moves outside of the grid field where the stroke began. Finally, the action engine 56 converts the received stroke into an action that can be sent to the electronic pen client 22. By using grid action-field-types, the action engine knows which type of action to produce for a specific grid field.

Referring now to FIGURE 8, there is illustrated a block diagram of a state machine for the control block 32 shown in FIGURE 7. In this figure, events are indicated in capital letters, while tasks associated with the event are depicted in brackets. The process starts at step 60 with a start up event 62, which causes the position FIFO block 38 to begin receiving detected positions. Initially, the electronic pen 10 is in a no grid loaded state 64, which means that the electronic pen 10 does not have a grid loaded in the grid description block 34. As a result, the control block 32 generates an outside grid indication 66, thereby causing the electronic pen 10 to send the request for a new grid description to the electronic pen client 22 (i.e., in accordance with the new grid procedure) and to stop the FIFO buffer 38. At this point, the electronic pen 10 enters a waiting for grid state 68.

Once the new grid has been received (as indicated at 70) , the control block 32 moves to a grid loaded state 72, at which time the new grid is loaded into the grid description block 34 and the position FIFO block 38 resumes operation. On the other hand, if no grid is received (as indicated at 74), at least a portion of the positions stored in the FIFO buffer 38 are erased. Which part of the FIFO buffer to erase is determined by the grid exception area, if any, in the received empty grid description. Accordingly, all positions stored in the FIFO buffer 38 that are within the grid exception area should be erased. If no grid exception is received, the stroke associated with the position is erased. In addition, the FIFO block 38 resumes operation and the control block 32 moves into the no grid loaded state 64.

When the control block 32 is in the grid loaded state 72, a current grid is loaded in the grid description block 34. While the control block 32 remains in this state 72, the position FIFO block 38 continues to receive detected positions and passes them on to the stroke engine 52 and action engine 56. Actions produced by the action engine 56 are sent (as indicated at 58) to the electronic pen client 22 (i.e., in accordance with the action procedure described above).

At some point, an outside grid indication 74 may be received by the control block 32 from the in grid detector 44. The outside grid event 74 causes the FIFO block 38 to stop generating new positions. In addition, the electronic pen 10 enters a flushing stroke and action state 76 wherein the strokes that are currently in the stroke engine 52 and the actions that are currently in the action engine 56 are flushed to the electronic pen client 22. Once the stroke engine 52 and action engine 56 have been fully flushed (as indicated at 78), the electronic pen 10 sends a request for a new grid to the electronic pen client 22 and unloads the current grid. The control block 32 then moves back into the waiting for grid state 68.

As a general matter, the electronic pen 10 may be capable of supporting various different types of output, including audio, such as warning tones; visual, such as a flashing light; tactile, such as vibration; and/or ink. In some cases, it might be desirable to allow the user of the electronic pen 10 to turn off the ink of the pen 10, such as when the electronic pen is being used on a portion of the address pattern that is public or shared or when the user wants to be able to reuse the current sheet of paper.

The electronic pen client 22 will now be described in greater detail. Generally, the electronic pen client 22 is analogous to a regular web browser. It is responsible for loading applications from application servers 30 and for handling input form the electronic pen 10. Preferably, the electronic pen client 22 is located in a separate device from the electronic pen 10 itself. This is because it is desirable to minimize the size and power supply requirements of the electronic pen 10, which will likely be adversely affected by the processing resources and memory necessary to support the functions of the electronic pen client 22.

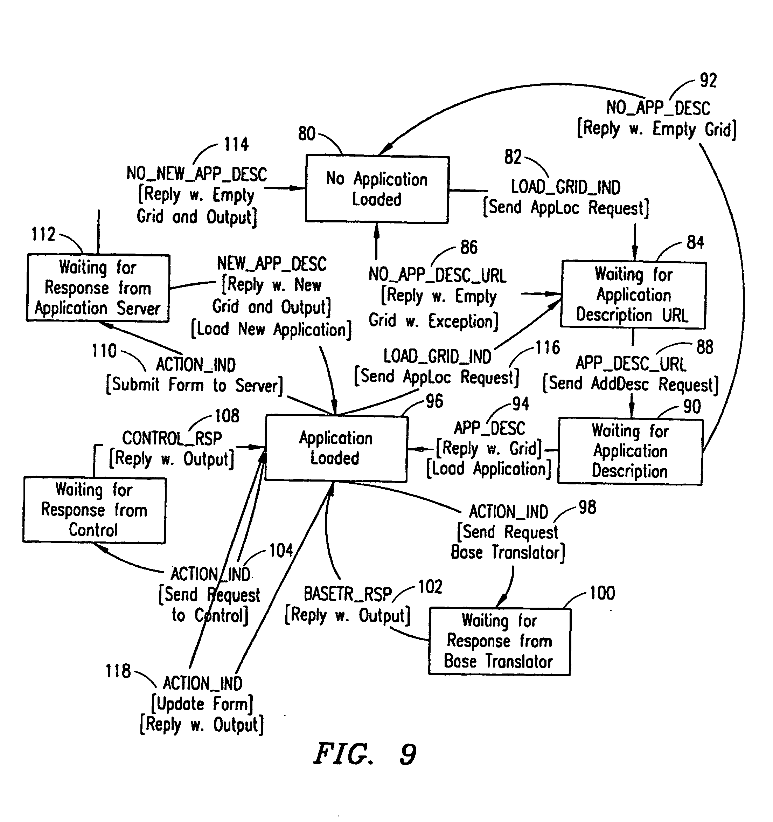

Referring now to FIGURE 9, there is illustrated a block diagram of a state machine for the electronic pen client 22. Initially, the electronic pen client 22 is in a no application loaded state 80. The electronic pen client 22 recognizes only one signal when in this state 80, namely a new grid request from the electronic pen 10. Such a request causes a load grid indication event 82. The electronic pen client 22 responds by sending a request to the name server 26 to translate a position contained within the new grid request into a URL where the application description can be found (i.e., in accordance with the find application location procedure). Next, the electronic pen client 22 enters a waiting for application description URL state 84. If no URL for the application description can be found (as indicated at 86), the electronic pen client 22 sends a new grid reply to the electronic pen 10, wherein the reply contains an empty grid description with a grid exception. As a result, the electronic pen client 22 returns to the no application loaded state 80.

If a URL for the application description is received from the name server 26 (as indicated at 88), the electronic pen client 22 sends a request to the application server 30 to retrieve the application description (i.e., in accordance with the get application description procedure). Accordingly, the electronic pen client 22 enters a waiting for application description state 90.

If the electronic pen client 22 does not receive an application description from the application server 30 (as indicated at 92), a new grid reply is sent by the electronic pen client 22 to the electronic pen 10 wherein the reply contains an empty grid. Thus, the electronic pen client 22 returns to the no application loaded state 80. If, however, the electronic pen client 22 does receive an application description from the application server 30 (as indicated at 94), the electronic pen client 22 sends a new grid reply to the electronic pen 10 containing a new grid description, and the electronic pen client 22 loads the application in its memory. In addition, the electronic pen client 22 moves into an application loaded state 96.

In the application loaded state 96, five types of actions can be received by the electronic pen client 22 from the electronic pen 10. First, a received action can include a request that the electronic pen client 22 cannot handle itself, in which case the electronic pen client 22 will send the action to the base translator 28 (as indicated at 98). The electronic pen client 22 then moves into a waiting for response from the base translator state 100. Once a base translator response 102 is received by the electronic pen client 22, the electronic pen client 22 updates a current form or other data associated with the currently loaded application and sends an action reply to the electronic pen 10 with appropriate output information.

Another type of action that the electronic pen client 22 can receive from the electronic pen 10 is a request that should be forwarded to a control node 24. In such a case, the action is sent to a control URL specified in the application description (as indicated at 104), and the electronic pen client 22 enters a waiting for response from the control state 106. Once a response is received from the control (as indicated at 108), the electronic pen client 22 sends an action reply to the electronic pen 10 with appropriate output information.

A third type of action is a submit form request, in response to which the electronic pen client 22 will submit the current form to the application server 30 that is identified by the URL in the application description (as indicated at 110) . The electronic pen client 22 then enters a waiting for response from the application server state 112. If the application server 30 responds by sending an empty application description to the electronic pen client 22 (as indicated at 114), the current application is unloaded from the electronic pen client 22 and an action reply is sent to the electronic pen 10 with an empty grid. As a result, the electronic pen client 22 returns to the no application loaded state 80. On the other hand, if the application server 30 responds with a non-empty application description, the old application is unloaded from the electronic pen client 22, the new application description is parsed and loaded in the electronic pen client 22, an action reply is sent to the electronic pen 10 with a new grid description and with appropriate output information, and finally the electronic pen client 22 returns to the application loaded state 96.

A fourth type of action that can be received by the electronic pen client 22 from the electronic pen 10 is a request to load a new grid. This action occurs, for example, when a position outside of the current grid is detected by the electronic pen 10. When a new grid request is received, the electronic pen client 22 sends a request to the name server 26 (as indicated at 116) and the electronic pen client 22 returns to the waiting for application description URL state 84.

Finally, a fifth type of action that can be received by the electronic pen client 22 is an action that the electronic pen client 22 can handle itself, in which case the electronic pen client 22 updates the current form and sends an action reply to the electronic pen 10 with appropriate output information (as indicated at 118). The electronic pen client 22 then remains in the application loaded state 96. One type of action that the electronic pen client 22 might be able to handle itself is a local application. For example, the electronic pen client 22 might be capable of performing certain basic functions that are defined by a local application. Thus, when the electronic pen client 22 receives a new grid request, the position associated with the new grid request can be analyzed to determine if it corresponds to a local application. If so, the electronic pen client 22 can load the application description from its local memory, send a new grid description to the electronic pen 10 without having to communicate with the name server 26 or the application server 30.

Another action that might be handled locally by the electronic pen client 22 relates to the selection of fields within a form. When the electronic pen client 22 receives an action, the field that corresponds to that action receives focus. When this occurs, the electronic pen client 22 might display the field' s value on its display or output the value by audio. In addition, the electronic pen client 22 might allow the user to edit the value of the field by means other than the electronic pen 10. Yet another type of action that might be handled by the electronic pen client 22 itself are actions that relate to a clipboard function. When a "copy" field is selected, the value of the field that had focus at the time the copy field was selected is transferred to the clipboard. Similarly, when a "paste" field is selected, the value stored in the clipboard is transferred to the field that had focus at the time the paste field was selected.

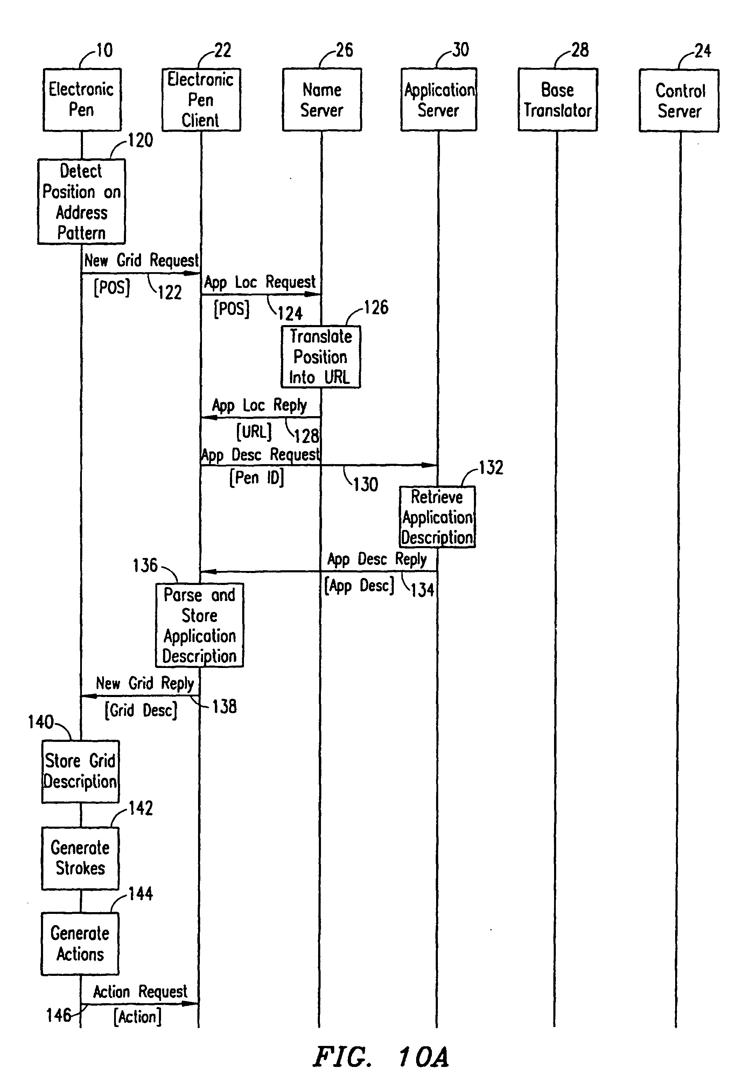

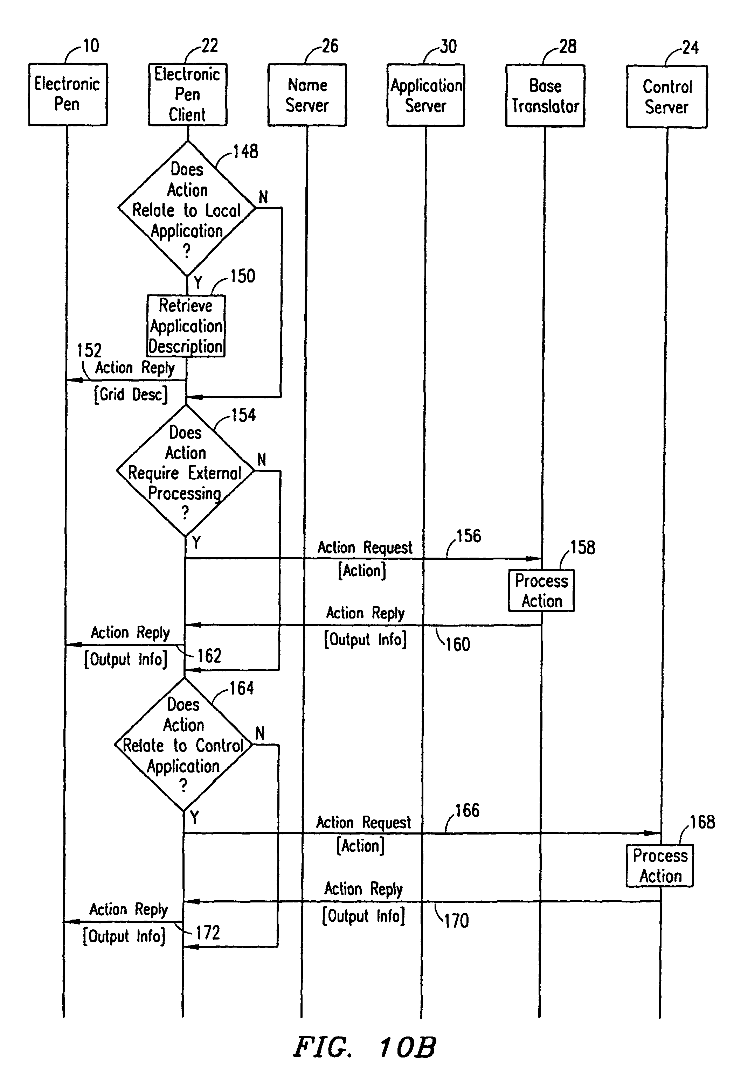

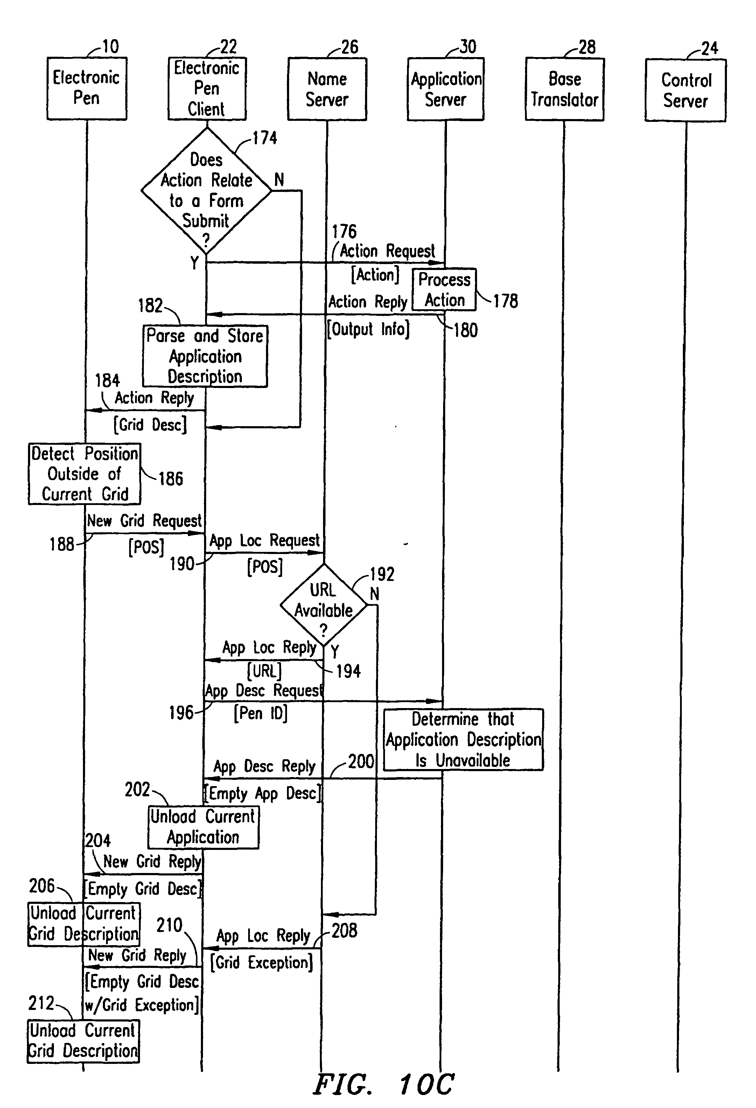

Referring now to FIGURES 10A through 10C, there is shown, by way of example, a message flow and signaling diagram illustrating the operation of the electronic pen system 2 depicted in and discussed in connection with FIGURE 2. Initially, the electronic pen 10 detects a first position on the address pattern at step 120 (e.g., at a location on a sheet of paper designated for composing and sending emails). At this stage, it is assumed that the electronic pen 10 is in a no grid loaded state. Thus, in response to the detection of the first position, the electronic pen 10 sends a new grid request 122, which contains the detected position information, to the electronic pen client 22. As a result, the electronic pen client 22 sends an application location request 124 containing the detected position information to the name server 26, at step 126. The name server 26 translates the detected position into a URL where an application description that corresponds to the detected position can be found (e.g., a URL address for a server containing an email application), and returns an application location reply 128 containing the retrieved URL to the electronic pen client 22.

The electronic pen client 22 then sends an application description request 130, which contains the unique pen ID for the electronic pen 10, to the application server 30. The application server 30 retrieves the application description at step 132 and sends an application description reply 134 containing the retrieved application description to the electronic pen client 22. The electronic pen client 22 then parses and stores the application description at step 136. This step further involves generating a current grid description from the application description and sending the grid description to the electronic pen 10 in a new grid reply 138. The electronic pen 10 stores the received grid description at step 140 and resumes processing of the detected positions. Using the detected positions and the information in the grid description (e.g., so that the electronic pen 10 knows which fields of the email form are being filled in), the electronic pen 10 generates strokes at step 142 and generates actions at step 144 using the stroke engine 52 and action engine 56 shown in FIGURE 7.

Each time an action is generated that cannot be handled by the electronic pen 10 itself, an action request 146 containing a description of the action is sent from the electronic pen 10 to the electronic pen client 22. At this point, the electronic pen client 22 should determine what type of action has been received so that it can respond to the action in an appropriate manner. First, it is determined whether the action requires the attention of, or otherwise should be processed in accordance with, a local application at step 148. Very basic applications or frequently used applications (e.g., delete entered text), for example, might be stored locally to avoid having to contact another entity. In such a case, the electronic pen client 22 retrieves the local application at step 150 and sends an action reply 152, which can contain a new grid description or other appropriate information.

However, if it is determined at step 148 that the received action does not relate to a local application, the process continues at step 154 where it is determined whether the received action requires processing by an external translator (e.g., handwriting recognition). If so, an action request 156 containing a description of the action is sent by the electronic pen client 22 to the base translator 28. The base translator 28 processes the action at step 158 and sends an action reply 160 containing output information responsive to the received action (e.g., text corresponding to written characters) to the electronic pen client 22, which can forward the output information to the electronic pen 10 in an action reply 162, if necessary.

If it is determined at step 154 that the received action does not require processing by an external translator, it is next determined whether the action relates to a control application at step 164. If so, an action request 166 containing a description of the action is sent by the electronic pen client 22 to the control server 24. The control server 24 processes the received action at step 168 and, if a response is necessary, returns output information responsive to the received action in an action reply 170, which is forwarded from the electronic pen client 22 to the electronic pen 10 in an action reply 172.

Assuming that it is determined at step 164 that the received action does not relate to a control function, it is next determined whether the action comprises a request to submit a form at step 174 (e.g., a selection of a "send" area on the email form). If so, an action request 176 containing the data entered onto the form is sent by the electronic pen client 22 to the application server 30. The application server 30 processes the form at step 178 and sends an action reply 180 containing a new application description (or an empty application description) to the electronic pen client 22. The electronic pen client 22 parses and stores the new application description at step 182 and generates a new grid description from the newly received application description. The electronic pen client 22 then sends an action reply 184 containing the new grid description. Although not illustrated in the figure, the electronic pen 10 will typically respond to the receipt of a new grid description by unloading its current grid description and loading the new grid description into its memory.

At some point, it is assumed that the electronic pen 10 detects a position that is outside of the currently loaded grid at step 186. In response to such an event, the electronic pen 10 sends a new grid request 188 containing the newly detected position data to the electronic pen client 22. In response, the electronic pen client 22 again generates an application location request 190 containing the detected position data and sends the request to the name server 26. The name server 26 determines whether a URL for an application description that corresponds to the newly detected position is available at step 192.

If so, the name server 26 sends an application location reply 194 containing a retrieved URL to the electronic pen client 22, which in turn sends an application description request 196 containing the unique pen ID for the electronic pen 10 to the application server 30 at the identified URL address, just as previously discussed in connection with messages 128 and 130. In this case, however, it is assumed that the application server 30 determines that the requested application description is unavailable at step 198. As a result, the application server 30 sends an application description reply to the electronic pen client 22 containing an empty application description. In response to the receipt of an empty application description, the electronic pen client 22 unloads the current application at step 202 and sends a new grid reply 204 containing an empty grid description to the electronic pen 10. The electronic pen 10 responds to the receipt of the empty grid description by unloading the current grid description at step 206.

Another possibility is that the name server 26 determines at step 192 that a URL corresponding to the detected position is not available. In this situation, the name server 26 sends an application location reply 208 to the electronic pen client 22. The reply 208 may simply be empty to indicate that a URL is not available. Preferably, however, the reply 208 contains a grid exception defining the largest area possible around the detected position for which there is no corresponding URL. In response to the reply 208, the electronic pen client 22 sends a new grid reply 210 containing an empty grid description with a grid exception. Upon receiving the reply 210, the electronic pen 10 unloads the current grid description at step 212. Furthermore, assuming that the electronic pen 10 receives and recognizes the grid exception information, the electronic pen 10 may subsequently be able to determine that certain detected positions on the address pattern are not associated with any application without having to send a request to the name server 26 or the application server 30.

As demonstrated by the foregoing text, the electronic pen 10 can be adapted to perform a wide variety of functions. To facilitate use of the electronic pen 10 in connection with different applications and functions, it is desirable that the user of the electronic pen 10 can customize a configuration of the electronic pen 10. However, because the electronic pen 10 is not designed to accept input data (i.e., the electronic pen 10 does not include typical MMI mechanisms, such as keys and displays) , there is no clear way to input configuration data to the electronic pen 10. To satisfy the needs and preferences of the electronic pen user, there should be some mechanism for allowing the user to set certain fundamental parameters. In addition, it will frequently be desirable for the electronic pen 10 to enter into a locked mode after the electronic pen 10 is switched off or powered down. Thus, there also needs to be a way to unlock the electronic pen 10 upon being powered up.

In accordance with the present invention, the electronic pen 10 includes an application that recognizes certain areas of the address pattern as setting areas. By using the electronic pen 10 in connection with a paper that is formatted for entry of settings data, the settings software, which might alternatively be located in the electronic pen client 22, can be used to process user specified settings data. The formatted settings paper can be included, for example, as part of a users manual for the electronic pen 10 product and can be delivered in several copies to allow for multiple reconfigurations.

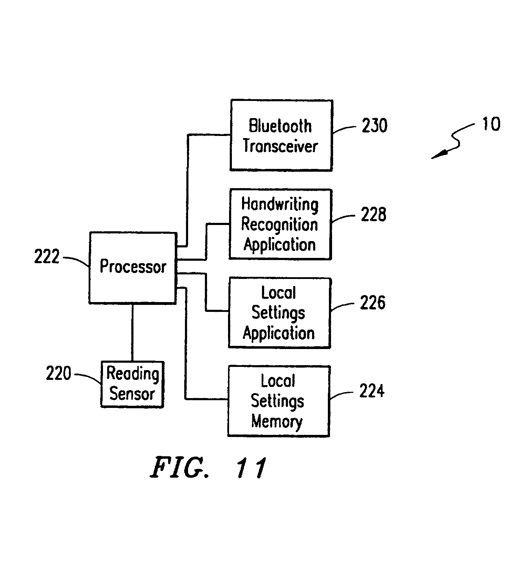

Referring now to FIGURE 11, there is illustrated a block diagram of the electronic pen 10 for use in configuring the electronic pen 10 in accordance with one possible embodiment of the present invention. The electronic pen 10 includes a reading sensor 220 that detects portions of the address pattern and forwards the detected information to a processor 222. The processor 222, using a local settings application 226, recognizes the detected portion of the address pattern as being within a predefined settings area. The processor 222 can then translate positional data received from the reading sensor 220 into settings information using the local settings application 226 and a handwriting recognition application 228. The selected settings can then be stored in a local settings memory 224. The configuration settings might include such information as a URL or IP address for use in addressing a desired modem, cell phone, and/or internet server, the timer setting for delivering alert signals, a time out setting for powering down the electronic pen 10, a user personal identification number (PIN) code, a user name, or any other settings or configuration information. The processor 222 could further contact a server a selected IP address using a Bluetooth™ transceiver 230.

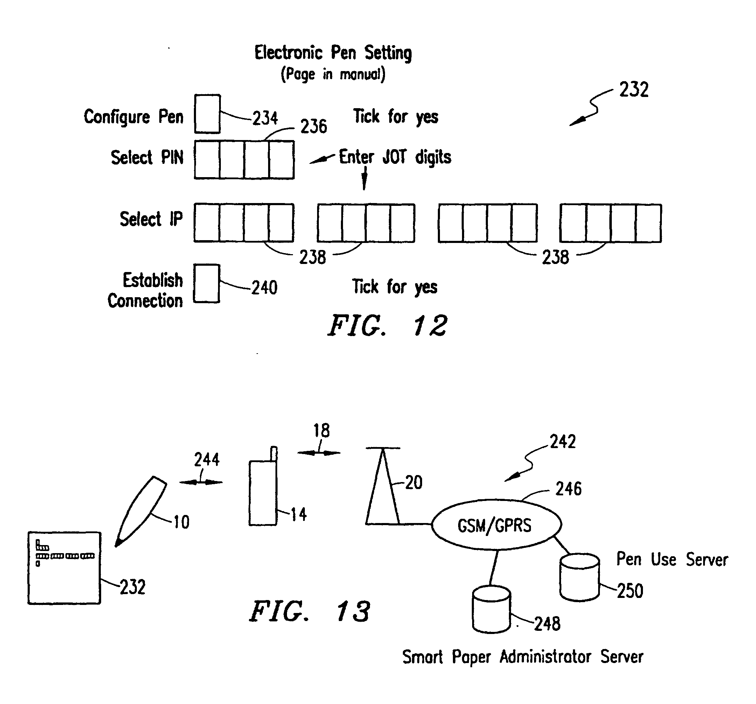

Referring now to FIGURE 12, there is illustrated an example of an electronic pen setting form 232 that can be included as a page in the electronic pen user manual and that can be used for configuring the electronic pen 10. When the electronic pen 10 is powered up for the first time, the electronic pen 10 is essentially "functionless" because no configuration has been made. By touching the pen to a special "configure pen" box 234 the electronic pen 10 recognizes the address pattern within the configure pen box 234, and the electronic pen software enters into a configuration mode in which the electronic pen 10 initiates a simple alphanumeric character recognition application (e.g., JOT). The electronic pen 10 can then be used to enter a four digit PIN number in a select PIN field 236. The handwritten PIN is recognized using the character recognition software and beeps are preferably used to acknowledge recognition. For example, a single beep can be used to acknowledge the first digit, a double beep can be used to acknowledge the second digit, and so on. Alternatively, a number of beeps can be used to acknowledge the inputted digit value. For example, three beeps correspond to an entered value of three. Next, the user can select an IP or URL address by writing the address or an associated code in a select IP field 238. Again, beeps can be used to acknowledge recognition of the entered information. Finally, the electronic pen 10 can be used to select an established connection box 240 to initiate communications with the selected IP or URL address. As an alternative to the use of character recognition software, the electronic pen setting form 232 can instead include a plurality of boxes each corresponding to a different alphanumeric character. By touching the electronic pen 10 within particular boxes, a portion of the address pattern contained in each particular box is detected and a selection of the associated alphanumeric character is made. Each individual selection can again be acknowledged by one or more beeps.

Referring now to FIGURE 13, there is illustrated a system 242 for use in establishing a connection after selection of the established connection box 240 shown in FIGURE 12. The electronic pen 10 first contacts a mobile phone 14 via a Bluetooth™ interface 244. Alternatively, other types of wireless technology, such as infrared signalling or inductive coupling, or wired technology, such as a cable connection can be used. The mobile phone 14, in turn, transmits a request for connection via an air interface 18 to a base station 20. The base station 20 forwards the request over a GSM and/or general packet radio service (GPRS) network 246 to a smart paper administrator server 248 located in an address that is preprogrammed in the pen. The smart paper administrator server 248 recognizes the IP or URL address selected during the initial configuration procedure and reroutes the connection to a pen user server 250 located at the selected IP or URL address. The configuration information can then be downloaded to the pen user server 250 from the electronic pen 10 and a beep acknowledgment can be delivered back to the electronic pen 10 via the GSM and/or GPRS network 246, the air interface 18, and the Bluetooth™ interface 244. At this point, the configuration of the electronic pen 10 is complete, and the electronic pen 10 can only be reconfigured by the owner of the electronic pen 10 and his associated manual once the owner has correctly filled in the electronic pen settings form 232 in the legally purchased manual.

After the initial configuration, the user of the electronic pen 10 can log in using any addressed paper or other addressed surface. Such as login can be more sophisticated because the configured electronic pen 10 can automatically access an authorized support server (i.e., the pen user server 250). For example, to ensure that the electronic pen 10 is used only by an authorized user, the electronic pen 10 can be placed in a locked state each time it is powered down. To unlock the electronic pen 10 upon power up, the support server can be used to recognize the user's handwritten signature or PIN.

In accordance with the invention, the setting functionality is conveniently built into the electronic pen 10. In other words, the normal functionality of the electronic pen 10 is used for configuration (i.e., handwriting on an addressed surface operates as the electronic pen's MMI). Furthermore, configuration of the electronic pen 10 is restricted to the owner of the electronic pen 10 because the original manual is needed for configuration. The scheme prevents unauthorized use and deters theft of the electronic pen 10.

In accordance with another embodiment of the present invention, an electronic pen 10 can be used in connection with a specially formatted paper 12 to provide both navigation and input to any type of electronic device. For example, a particular sheet of paper can be associated with a specific electronic device. Different areas on the paper can be associated with different functions. The paper might have an area or field for drawing input, an area or field for text input, an area that is divided into special functional buttons necessary for the associated electronic device, and an area or field for navigation. Which of the fields the electronic pen 10 is pointing at can be determined by using a built-in camera or other optical detector in the electronic pen 10 to detect a portion of the address pattern on the paper. Similarly, the exact position or movement of the electronic pen 10 within a particular field can also be determined by detecting only a small portion of the address pattern that is adjacent to the tip of the electronic pen 10 as it is used to write, draw, or otherwise contact the paper. Moreover, when the electronic pen 10 is used for text input, character recognition can be performed in the electronic pen 10, in an electronic device associated with the electronic pen 10 or the particular sheet of paper, or in a server.

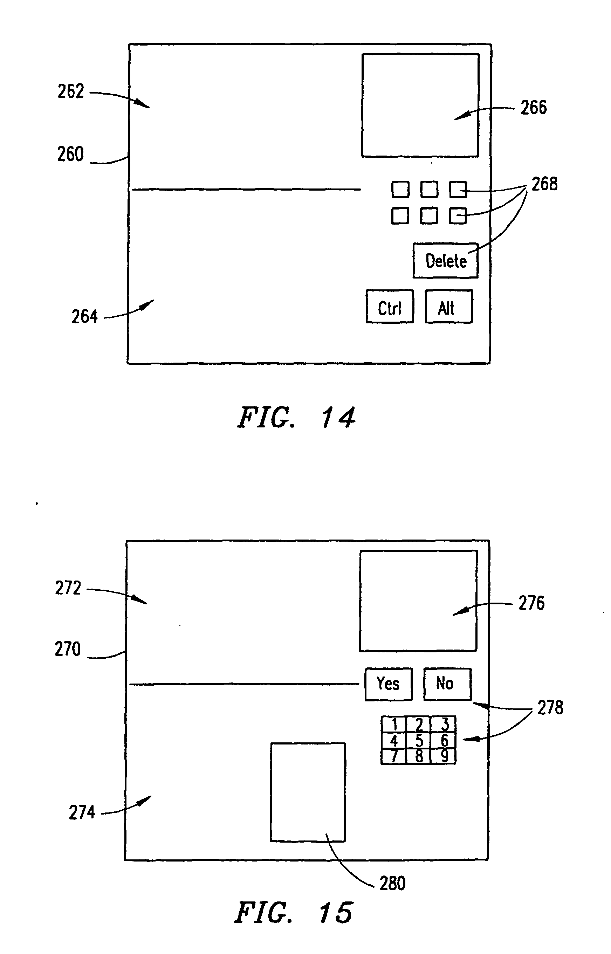

Referring now to FIGURE 14, there is illustrated an example of a specially formatted paper 260 for PC navigation and input. By using the paper 260 together with an electronic pen 10, both the keyboard and mouse can either be replaced or their functionalities can be emulated. The specially formatted paper 260 includes an address pattern, as discussed above, such that the precise position of the electronic pen 10 on the paper 260 can be determined by detecting a small portion (e.g., a 2 mm by 2 mm area) of the address pattern. The formatted paper 260 further includes various fields for use in performing different functions, including a drawing area 262, a text input area 264, a navigation area 266, and a number of functional keys 268 (e.g., Insert, Home, Return, Backspace, and the like).

When the electronic pen 10 is used within the navigation area 266, it emulates the functions of a mouse. Thus, the cursor or pointer on the PC screen follows the movements of the electronic pen 10. Execution of a mouse "click" can be done by touching the electronic pen 10 to a click field (e.g., in the functional key area 268), by optical or pressure sensitive detectors on the electronic pen 10, or by a click button on the electronic pen 10. In addition, other types of special fields might be included on the paper 260, such as a scrolling bar for performing scrolling functions or directional arrows for moving a cursor or pointer on the PC screen in specific directions.

To perform other types of PC input, the other fields on the specially formatted paper 260 can be used. The text input area 264 is used for writing characters that are interpreted by character recognition software in the electronic pen 10 or in the PC. Alternatively, a QWERTY or other type of keyboard can be included on the formatted paper 260. Special functional fields 268 can also be included for performing PC specific functions, such as Insert, Delete, Home, and the like. Furthermore, drawing input is performed using the drawing area 262. Preferably, the drawing area is kept separate from the navigation area 266 and the text input area 262 so that an ink version of the drawing, in addition to an electronically stored version, can be kept intact, if so desired.

Referring now to FIGURE 15, there is depicted an illustrative example of a specially formatted paper 270 for cellular phone navigation and input. The formatted paper 270 can either be a separate paper or part of the cellular phone. Such a formatted paper 270 can replace or emulate the function of a touchscreen, a chatboard, or a traditional keyboard. The specially formatted paper 270 again includes an address pattern that facilitates determining a precise location of the electronic pen 10 on the formatted paper 270. In addition, the specially formatted paper includes a drawing area 272, a text input area 274, a navigation area 276, a phone keyboard area 278, and a number input area 280.

When the electronic pen 10 is used in the navigation area 276, it can perform the same function as a mouse (i.e., moving a cursor or pointer that is displayed on a cellular phone display screen) or can perform a two or four way scroll function. Other special navigation fields could also be included for performing WAP browser navigation or fast menu access (e.g., a phone book button).

The electronic pen 10 can also be used in the text input area 274 and the drawing area 272 to input handwritten text and handwritten images, respectively. Such handwritten input can be converted into ASCII text or interpreted as a command to perform some other function by handwriting recognition software in the electronic pen 10, in the phone, or in a server. Similarly, phone numbers can dialed by writing the number in a number output area 280. Alternatively or in addition, special fields can be included to emulate the function of a complete phone keyboard (i.e., by touching the electronic pen 10 in a field corresponding to each of the digits in a phone number and then touching a "yes" field, a phone number can be dialed). Accordingly, all of the functions, and possibly more, that can be performed with existing phone MMIs can instead be done using an electronic pen 10 and a sheet of paper 270 designed for performing phone control functions but in a simpler and more convenient manner.

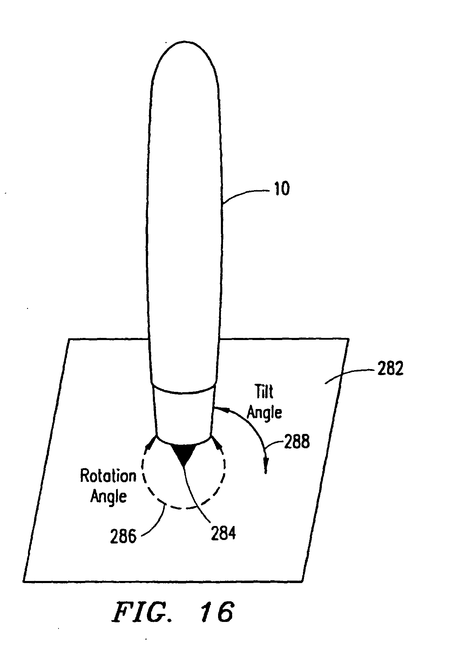

Referring now to FIGURE 16, there is illustrated an electronic pen 10 for use in performing an advanced joystick functionality. In this case, a certain part of the overall address pattern reserved for use in emulating joystick functions is printed on a formatted paper 282. By using the electronic pen 10 in the joystick area, movements of the electronic pen 10 can be translated into joystick motions and communicated to a game console or PC for use as an application MMI.

In a preferred embodiment, for example, the joystick functionality is enabled when the electronic pen 10 is placed vertically in the joystick area 282. Thereafter, when the electronic pen 10 is moved, tilted, or rotated while the tip 284 of the electronic pen 10 is in contact with the formatted paper 282, a sensor or camera in the electronic pen 10 can detect a portion of the address pattern adjacent to the electronic pen 10. The detected portion of the address pattern can then be converted, by processing address pattern images detected by the sensor or camera, into data identifying: the current position of the electronic pen 10 relative to the address pattern; the rotation angle of 0 to 360 degrees (as indicated at 286); the tilt angle of 0 to 90 degrees (as indicated at 288); and the amount of pressure between the electronic pen tip 284 and the formatted paper 282. This data can then be sent to a controlled device at a specified update rate to control, for example, an object in a game (e.g., a plane in a flight simulator game).

In accordance with the invention, a system that includes an electronic pen 10, or other similar general reading device, and a specially formatted (i.e., addressed) paper 260 or 270 can be used to control any electronic device to: (i) execute applications associated with the paper 260 or 270 on an electronic device capable of communicating with the electronic pen 10; (ii) implement the application MMI for an electronic device; (iii) navigate on an electronic device; and/or (iv) facilitate text, drawing, or functional input to an electronic device. Furthermore, special functionalities in the electronic pen 10 or formatted paper 260 or 270 can permit emulation of a mouse click, a touchscreen tap or motion, pressing of a functional or input key, and/or other graphical user interface (GUI) functions, such as a scroll bar.

Although the invention is described in connection with examples of PC, game console, and cellular phone control functions, the invention can also be used to control the electronic pen itself, a PDA, calculator, digital camera, and any other electronic device. Moreover, the invention can be used to emulate or replace the functions of virtually any type of MMI, including a mouse, a keyboard, a touchscreen and stylus, a numeric keypad, a gamepad, and the like.

In accordance with another embodiment of the present invention, an electronic pen 10 can be used to control a separate utility device using a wireless application protocol (WAP) server associated with the separate utility device. Such a system operates in much the same way as described in Swedish Application No. 9904373-9, entitled "A Device and a Method for Operating an Electronic Utility Device from a Portable Telecommunication Apparatus," filed December 1, 1999, and U.K. Application No. 0018027.3, entitled "Communications Systems," filed July 21, 2000. In the present invention, however, a user of the electronic pen 10 can access, control, and operate each of a plurality of electronic accessories, home appliances, or other external electronic utility devices using a WAP browser contained either in the electronic pen 10 or in an electronic pen client 22. By using the electronic pen 10 on an addressed surface 12, a user can input commands or other data that can be communicated by the WAP browser to a WAP server module associated with the electronic accessory, home appliance, or other external electronic utility device to be accessed, controlled, or operated.

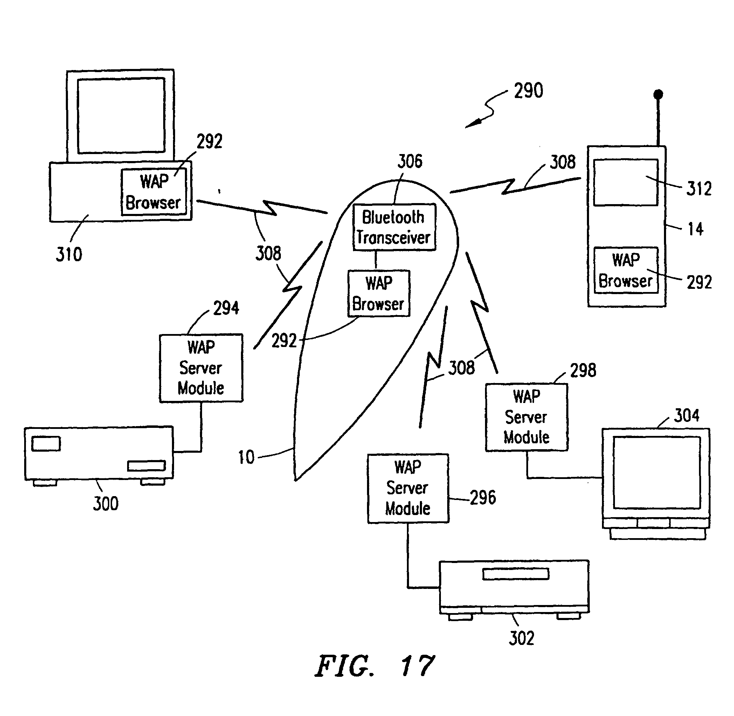

Referring now to FIGURE 17, there is illustrated a schematic diagram of a control system 290 in accordance with the present invention. By writing with the electronic pen 10 on, or touching the electronic pen 10 to, an appropriate area on an addressed surface 12 (e.g., a sheet of paper that contains a form for controlling a particular electronic utility device), a WAP browser 292 or electronic pen client 22 can be used to communicate with a WAP server module 294, 296, or 298 by sending a command or other data corresponding to the information entered or written with the electronic pen 10. The WAP server module 294, 296, or 298 then uses the command or other data to operate the associated electronic utility device 300, 302, or 304 and/or to control the functionality thereof.

In one embodiment of the invention, the WAP browser 292 or electronic pen client 22 is included in the electronic pen 10 itself. The electronic pen 10, using the WAP browser 292 or client processor, detects positions of the electronic pen 10 relative to the addressed surface 12 and translates the detected positions into uniform resource locators (URLs) with common gateway interface (CGI) calls. The CGI calls are then transmitted by a Bluetooth™ transceiver 306 in the electronic pen 10, via a Bluetooth™ radio interface 308 to the WAP server module 294, 296, or 298 associated with the identified URL. In this case, the portion of the address pattern associated with the WAP server module 294, 296, or 298 must first be loaded into the electronic pen 10 to enable the electronic pen 10 to translate detected positions into appropriate commands or other data. This information can be downloaded into electronic pen 10 by a personal computer (PC) 310 or mobile station 14 using a Bluetooth™ radio interface 308. Alternatively, instead of using a Bluetooth™ radio interface 308, other types of wireless technology, such as infrared signalling or inductive coupling, or wired technology, such as a cable connection, can be used.

As an example, the electronic pen 10 can be used in connection with a sheet of paper containing a predefined portion of the address pattern to control a CD player 300. For instance, by drawing a play symbol, writing the word "play," or touching the electronic pen 10 within a "play" field on the sheet of paper, the WAP server module 294 associated with the CD player 300 can execute the play command and cause the CD player 300 to begin playing a CD. Furthermore, the electronic pen 10 can be used to perform more advanced functions, such as programming a VCR. In particular, the electronic pen 10 can be used to fill in a "program VCR" form. The electronic pen 10 then transmits the VCR timer settings via a Bluetooth™ interface 308 to the WAP server module 296 associated with the VCR 302. As a result, the WAP server module 296 automatically programs the VCR 302 to record in accordance with the designated timer settings.

In another embodiment of the invention, the WAP browser 292 or electronic pen client 22 is implemented within a mobile phone 14 or other electronic device, such as a PC 310. In this case, grid information relating to the portion of the address pattern used to control a particular electronic utility device 300, 302, or 304 can be downloaded via an air interface or other Internet connection using WAP. In this case, a user of the electronic pen 10 can obtain feedback relating to the commands or entered data using a display screen 312 on the mobile station 14 or other electronic device.

As an example of this embodiment, a portion of a newspaper that lists television program schedules can be formatted with a selected portion of the address pattern. By using the electronic pen 10 to draw a circle around a particular television program, a user indicates that the selected program should be recorded by the VCR 302 or that a television 304 should be tuned to the identified television program. The positions on the newspaper address pattern detected by the electronic pen 10 are transmitted by a Bluetooth™ transceiver 306 via a Bluetooth™ radio interface 308 to the mobile station 14. The mobile station 14 downloads information about the area of the address pattern on which the positions are detected. Using this information, the WAP browser 292 or electronic pen client 22 in the mobile station 14 translates the detected positions into appropriate commands for controlling the VCR 302 or television set 304. The identified commands are transmitted by the WAP browser 292 to the appropriate WAP server module 296 or 298, directly or via the Bluetooth™ transceiver 306 of the electronic pen 10, over a Bluetooth™ radio interface 308. The receiving WAP server module 296 or 298 then performs the requested operation.

Although various preferred embodiments of the method and apparatus of the present invention have been illustrated in the accompanying Drawings and described in the foregoing Detailed Description, it is understood that the invention is not limited to the embodiments disclosed, but is capable of numerous rearrangements, modifications, and substitutions without departing from the invention as set forth and defined by the following claims. Furthermore, it shall be understood that the terms "comprises" and "comprising," when used in the foregoing Detailed Description and the following claims, specifies the presence of stated features, elements, steps, or components but does not preclude the presence or addition of one or more other features, elements, steps, components, or groups thereof.

## Claims

1. A system for unlocking an electronic reading device, comprising:
a formatted surface (260, 270, 282) having an address pattern, wherein a position relative to the address pattern can be determined from an examination of a portion of the address pattern;
an electronic reading device (10) including a reading sensor (220) for detecting portions of the address pattern; and
a first processor (222, 248) for translating detected portions of the address pattern into a data entry, **characterized in that** the system further comprises:
a second processor (222, 250) for comparing the data entry to a stored user identifier and for enabling the electronic reading device if the data entry corresponds to the stored user identifier.

2. The system of claim 1, wherein the first processor and the second processor are the same processor.

3. The system of claim 1, wherein the first processor performs said translation using character recognition.

4. The system of claim 1, wherein the data entry and the stored user identifier represent a handwritten signature.

5. The system of claim 1, wherein the data entry and the stored user identifier represent a personal identification number.

6. A method for unlocking an electronic reading device, comprising the steps of:
detecting a plurality of positions of an electronic reading device (10) relative to an address pattern on a formatted surface (260, 270, 282);
converting the plurality of detected positions into a data entry, said method **characterized by** further comprising the steps of:
comparing the data entry with a stored user identifier; and
enabling the electronic reading device based on the comparison if the data entry corresponds to the stored user identifier.

7. The method of claim 6, wherein the step of converting comprises performing handwriting recognition.

8. The method of claim 6, wherein the data entry and the stored user identifier represent a handwritten signature.

9. The method of claim 6, wherein the data entry and the stored user identifier represent a personal identification number.

## Patentansprüche

1. System zum Entsperren einer elektronischen Lesevorrichtung, umfassend:
eine formatierte Oberfläche (260, 270, 282), die ein Adressmuster aufweist, wobei eine Position relativ zu dem Adressmuster aus einer Untersuchung eines Abschnitts des Adressmusters bestimmt werden kann;
eine elektronische Lesevorrichtung (10), die einen Lesesensor (220) zum Erfassen von Abschnitten des Adressmusters einschließt; und
einen ersten Prozessor (222, 248) zum Übersetzen erfasster Abschnitte des Adressmusters in eine Dateneingabe, **dadurch gekennzeichnet, dass** das System weiter umfasst:
einen zweiten Prozessor (222, 250) zum Vergleichen der Dateneingabe mit einem gespeicherten Benutzer-Identifizierer, und zum Freigeben der elektronischen Lesevorrichtung, wenn die Dateneingabe dem gespeicherten Benutzer-Identifizierer entspricht.

2. System nach Anspruch 1, wobei der erste Prozessor und der zweite Prozessor der gleiche Prozessor sind.

3. System nach Anspruch 1, wobei der erste Prozessor die Übersetzung unter Verwendung einer Zeichenerkennung durchführt.

4. System nach Anspruch 1, wobei die Dateneingabe und der gespeicherte Benutzer-Identifizierer eine handschriftliche Signatur darstellen.

5. System nach Anspruch 1, wobei die Dateneingabe und der gespeicherte Benutzer-Identifizierer eine persönliche Identifikationsnummer darstellen.

6. Verfahren zum Entsperren einer elektronischen Vorrichtung, umfassend die Schritte:
Erfassen einer Mehrzahl von Positionen einer elektronischen Lesevorrichtung (10) relativ zu einem Adressmuster auf einer formatierten Oberfläche (260, 270, 282);
Konvertieren der Mehrzahl erfasster Positionen in eine Dateneingabe, wobei das Verfahren **dadurch gekennzeichnet ist, dass** es weiter die Schritte umfasst:
Vergleichen der Dateneingabe mit einem gespeicherten Benutzer-Identifizierer; und
Freigeben der elektronischen Lesevorrichtung auf der Grundlage des Vergleichs, wenn die Dateneingabe dem gespeicherten Benutzer-Identifizierer entspricht.

7. Verfahren nach Anspruch 6, wobei der Schritt eines Konvertierens ein Durchführen einer Handschrifterkennung umfasst.

8. Verfahren nach Anspruch 6, wobei die Dateneingabe und der gespeicherte Benutzer-Identifizierer eine handschriftliche Signatur darstellen.

9. Verfahren nach Anspruch 6, wobei die Dateneingabe und der gespeicherte Benutzer-Identifizierer eine persönliche Identifikationsnummer darstellen.

## Revendications

1. Système pour déverrouiller un dispositif de lecture électronique, comportant :
une surface formatée (260, 270, 282) ayant un motif d'adresse, dans lequel une position par rapport au motif d'adresse peut être déterminée à partir d'un examen d'une partie du motif d'adresse ;
un dispositif de lecture électronique (10) comprenant un capteur de lecture (220) destiné à capter des parties du motif d'adresse ; et
un premier processeur (222, 248) destiné à traduire des parties détectées du motif d'adresse en une entrée de données, **caractérisé en ce que** le système comporte en outre :
un second processeur (222, 250) destiné à comparer l'entrée des données à un identificateur mémorisé d'utilisateur et à valider le dispositif de lecture électronique si l'entrée de données correspond à l'identificateur mémorisé d'utilisateur.

2. Système selon la revendication 1, dans lequel le premier processeur et le second processeur sont le même processeur.

3. Système selon la revendication 1, dans lequel le premier processeur effectue ladite traduction en utilisant une reconnaissance de caractères.

4. Système selon la revendication 1, dans lequel l'entrée de données et l'identificateur mémorisé d'utilisateur représentent une signature manuscrite.

5. Système selon la revendication 1, dans lequel l'entrée de données et l'identificateur mémorisé d'utilisateur représentent un numéro personnel d'identification.

6. Procédé pour déverrouiller un dispositif de lecture électronique, comprenant les étapes qui consistent :
à détecter plusieurs positions d'un dispositif de lecture électronique (10) par rapport à un motif d'adresse sur une surface formatée (260, 270, 282) ;
à convertir la pluralité de positions détectées en une entrée de données, ledit procédé étant **caractérisé en ce qu'**il comprend en outre les étapes qui consistent :
à comparer l'entrée de données à un identificateur mémorisé d'utilisation ; et
à valider le dispositif de lecture électronique sur la base de la comparaison si l'entrée de données correspond à l'identificateur mémorisé d'utilisateur.

7. Procédé selon la revendication 6, dans lequel l'étape de conversion comprend l'exécution d'une reconnaissance manuscrite.

8. Procédé selon la revendication 6, dans lequel l'entrée de données et l'identificateur mémorisé d'utilisateur représentent une signature manuscrite.

9. Procédé selon la revendication 6, dans lequel l'entrée de données et l'identificateur mémorisé d'utilisateur représentent un numéro personnel d'identification.
